# EUROPÄISCHE PATENTANMELDUNG

(11) **EP 1 688 340 A1**
(43) Veröffentlichungstag der Anmeldung: **09.08.2006**
(21) Anmeldenummer: 06001954.4
(22) Anmeldetag: 31.01.2006
(51) Int. Cl.: B62D 65/04, B60R 21/34

(54) **Anordnung einer Frontklappe an einem Kraftfahrzeug**

(30) Priorität: 08.02.2005 DE 102005005683
(71) Anmelder: Bayerische Motoren Werke Aktiengesellschaft, 80809 München (DE)
(72) Erfinder: Köstler, Ulrich, 85241 Hebertshausen (DE); Drexl, Thomas, 80801 München (DE); Knechtel, Marcus, 85774 Unterföhring (DE)

(57) **Zusammenfassung**

Es ist eine Frontklappe an einem Fahrzeug über zumindest ein Scharnier (3) verschwenkbar angelenkt, sodass die Frontklappe normal geöffnet und geschlossen werden kann. Das Scharnier (3) weist ein Scharnieroberteil (5) und ein Scharnierunterteil (4) auf, die zueinander verschwenkbar sind. Das Scharnieroberteil (5) ist an der Frontklappe und das Scharnierunterteil (4) an einem Scharnierträger (1) angebracht, der an der Karosserie des Fahrzeugs angebunden ist. Der Scharnierträger (1) ist so gestaltet, dass entweder das Scharnierunterteil (4) mit dem Scharnierträger (1) verbunden sein kann, oder ein Aktuator (11) zwischen Scharnierunterteil (4) und Scharnierträger (1) angebracht sein kann, um die Frontklappe mit dem Scharnier (3) anheben zu können, oder ein Deformationselement (8) zwischen Scharnierunterteil (4) und Scharnierträger (1) angebracht sein kann.

## Beschreibung

Die Erfindung betrifft eine Anordnung einer Frontklappe an einem Kraftfahrzeug nach dem Oberbegriff des Patentanspruchs 1.

Um bei einer Kollision eines Fußgängers oder Radfahrers mit einem Kraftfahrzeug das Ausmaß von Verletzungen insbesondere im Brust- und Kopfbereich zu minimieren, ist es allgemein bekannt, einen relativ großen Mindestabstand zwischen einer Frontklappe und einer steifen Unterstruktur des Fahrzeugs (Motor, Federbeinaufnahmen, etc.) vorzusehen, sodass ein ausreichender Deformationsweg der Frontklappe zur Verfügung steht, um den Aufprall des Fußgängers oder Radfahrers auf ein biomechanisch verträgliches Maß zu verzögern.

Wenn der dazu benötigte Mindestabstand zwischen geschlossener Frontklappe und der steifen Unterstruktur aus bauraumtechnischen Gründen nicht zur Verfügung steht, kann die Frontklappe aktiv zumindest im hinteren Bereich angehoben werden, um den Mindestabstand zu erzeugen, wenn ein Zusammenstoß des Fahrzeugs mit einem Fußgänger oder Radfahrer detektiert wird.

So ist aus der DE 102 39 882 A1 eine Anordnung einer Frontklappe an einem Fahrzeug mit zumindest einem Scharnier bekannt, um das die Frontklappe zum normalen Öffnen und Schließen verschwenkbar ist. Das Scharnier ist mit einem Scharnieroberteil an der Frontklappe und mit einem Scharnierunterteil über eine Anhebevorrichtung an der Karosserie des Fahrzeugs angebracht. Wenn eine Sensoreinrichtung eine Kollision mit einem Fußgänger oder Radfahrer detektiert, wird die Frontklappe gegenüber der geschlossenen Stellung zusammen mit dem Scharnier durch die Anhebevorrichtung angehoben. Zur Montage dieser Anordnung einer Frontklappe werden folgende Schritte durchgeführt: Zunächst wird das Scharnier montiert. Dazu wird das Scharnierunterteil mit zumindest einer Schraube an der Karosserie angeschraubt, und das Scharnieroberteil an der Frontklappe befestigt. Anschließend wird die Anhebevorrichtung an der Karosserie einerseits und an dem Scharnierunterteil andererseits befestigt. Zum Schluss wird die zumindest eine Schraube, mit der das Scharnierunterteil an der Karosserie angeschraubt ist, wieder herausgeschraubt.
Es wird also zunächst die Frontklappe konventionell an der Karosserie angeschraubt. Dadurch kann die Frontklappe ganz normal justiert werden. Erst danach wird die Anhebevorrichtung montiert. Damit kann je nach Bedarf ein Fahrzeug mit und ohne Fußgängeraufprallschutz gebaut werden, ohne dass unterschiedliche Bauteile zum Einsatz kommen. Bei einem Fahrzeug ohne Fußgängeraufprallschutz entfällt einfach die Anhebevorrichtung und das Scharnierunterteil bleibt mit der Karosserie verschraubt. Auch kann der Fußgängeraufprallschutz jederzeit nachgerüstet werden.
Üblicherweise wird die Frontklappe mit dem Scharnier vor dem Lackierprozess an der Karosserie angeschraubt, damit die Frontklappe und das Scharnier mit lackiert werden. Die Anhebevorrichtung ist ein relativ empfindliches Bauteil, das durch die Temperaturen beim Lackierprozess und / oder den Lack selber in seiner Funktion beeinträchtigt werden könnte. Durch das obige Verfahren kann die Frontklappe vor dem Lackierprozess, und die Anhebevorrichtung nach dem Lackierprozess montiert werden. In der Werkstatt kann zur Durchführung von Reparaturen das Scharnierunterteil vorübergehend auch wieder mit der Karosserie verschraubt werden.

Bei manchen Fahrzeugen steht der erforderliche Mindestabstand zwischen geschlossener Frontklappe und der steifen Unterstruktur zur Verfügung, ohne dass die Frontklappe aktiv angehoben werden muss. Kritisch bleibt hierbei allerdings der Bereich der Frontklappe nahe bei den Scharnieren, mit denen die Frontklappe an die Karosserie angelenkt ist, da die Frontklappe in diesem Bereich nicht ausreichend deformierbar ist. Zur Vermeidung dieses kritischen Bereichs ist es aus der JP 2000-108842 A bekannt, zwischen einem Scharnier und einer Frontklappe und zwischen dem Scharnier und der Karosserie jeweils ein energieabsorbierendes Element anzubringen.

In der nicht vorveröffentlichten DE 103 42 717.1 ist eine Anordnung einer Frontklappe beschrieben, die mit zumindest einer Scharniereinrichtung mit der Karosserie verbunden ist, wobei die geschlossene Frontklappe zu den darunter angeordneten Aggregaten einen Mindestabstand aufweist. Zwischen Frontklappe und Scharnieranordnung und / oder zwischen Karosserie und Scharnieranordnung ist zumindest ein Deformationselement angeordnet, das aufgrund seiner Struktur und seiner Form beim Aufprall eines Fußgängers auf die Frontklappe plastisch verformt wird und dabei Energie absorbiert.
Die Montage dieser Anordnung einer Frontklappe an einem Fahrzeug kann in folgenden Montageschritten erfolgen:
a) Montage der zumindest einen Scharniereinrichtung: Befestigen der Scharniereinrichtung an der Karosserie und an der Frontklappe, sowie gegebenenfalls Einstellen der Scharniereinrichtung,
b) Montage des Deformationselementes, das später zwischen Scharniereinrichtung und Karosserie angeordnet ist: Befestigen des Deformationselementes an der Karosserie einerseits und an der Scharniereinrichtung andererseits,
c) Lösen der Befestigung, mit der die Scharniereinrichtung an der Karosserie befestigt ist.
Es wird also zunächst die Frontklappe so an der Karosserie befestigt, als ob kein Deformationselement vorgesehen ist. Dadurch kann die Frontklappe ganz normal justiert werden. Richtprozesse sind möglich ohne das Deformationselement zu verformen. Erst danach wird das Deformationselement an der Scharnieranordnung und an der Karosserie angebunden, und die Befestigung der Scharniereinrichtung an der Karosserie wieder gelöst. Damit kann je nach Bedarf ein Fahrzeug mit und ohne passiven Fußgängeraufprallschutz gebaut werden, ohne dass unterschiedliche Scharniereinrichtungen und / oder Karosserien zum Einsatz kommen müssen. Bei einem Fahrzeug ohne Fußgängeraufprallschutz entfällt einfach das Deformationselement und die Scharniereinrichtung bleibt an der Karosserie befestigt. Auch kann der Fußgängeraufprallschutz jederzeit nachgerüstet werden, denn das Deformationselement kann nach dem Rohbau und nach der Lackierung montiert werden, ohne dass die Einstellungen der Frontklappe verändert werden würden.

Aufgabe der Erfindung ist es, eine Anordnung einer Frontklappe an einem Fahrzeug zu schaffen, die die Integration eines aktiven oder passiven Fußgängeraufprallschutzes ermöglicht.

Diese Aufgabe wird mit einer Anordnung einer Frontklappe an einem Kraftfahrzeug mit den Merkmalen des Patentanspruchs 1 gelöst. Patentanspruch 3 enthält ein Verfahren zur Montage einer solchen Anordnung.

Gemäß Patentanspruch 1 ist eine Frontklappe an einem Fahrzeug über zumindest ein Scharnier verschwenkbar angelenkt, sodass die Frontklappe normal geöffnet und geschlossen werden kann. Das Scharnier weist ein Scharnieroberteil und ein Scharnierunterteil auf, die zueinander verschwenkbar sind. Das Scharnieroberteil ist an der Frontklappe und das Scharnierunterteil an einem Scharnierträger angebracht, der an der Karosserie des Fahrzeugs angebunden ist. Der Scharnierträger ist so gestaltet, dass entweder das Scharnierunterteil mit dem Schärnierträger verbunden sein kann, oder ein Aktuator zwischen Scharnierunterteil und Scharnierträger angebracht sein kann, um die Frontklappe mit dem Scharnier anheben zu können, wenn eine Kollision eines Fußgängers oder Radfahrers mit dem Fahrzeug detektiert wird, oder ein Deformationselement zwischen Scharnierunterteil und Scharnierträger angebracht sein kann, sodass die Frontklappe im Bereich des Scharniers nachgiebig ist.

So kann mit derselben Karosserie, derselben Frontklappe und demselben Scharnier ein Fahrzeug gebaut werden, das keinen, einen aktiven oder einen passiven Fußgängeraufprallschutz aufweist. Wenn kein Fußgängeraufprallschutz erforderlich ist, bleibt einfach das Scharnierunterteil direkt mit dem Scharnierträger verbunden. Wenn dagegen ein Fußgängeraufprallschutz erforderlich ist, und der zur Verfügung stehende Abstand zwischen Frontklappe und den darunter liegenden Aggregaten kleiner als der erforderliche Mindestabstand ist, wird zwischen Scharnierträger und Scharnierunterteil der Aktuator montiert (aktiver Fußgängeraufprallschutz). So kann die Frontklappe mit dem Scharnier angehoben werden, wenn eine Kollision des Fahrzeugs mit einem Fußgänger oder Radfahrer detektiert wird. Wenn dagegen ein passiver Fußgängeraufprallschutz möglich ist, weil der erforderliche Mindestabstand zwischen Frontklappe und den darunter liegenden Aggregaten zur Verfügung steht, wird das Deformationselement zwischen Scharnierträger und Scharnierunterteil montiert, sodass die Frontklappe auch im Bereich des Scharniers nachgiebig ist. Alle drei Varianten lassen sich realisieren, ohne dass unterschiedliche Scharniere, Frontklappen, Scharnierträger oder Karosserien notwendig wären.

Die Montage einer solchen Anordnung einer Frontklappe an einem Fahrzeug erfolgt gemäß Patentanspruch 3 bevorzugt in folgenden Schritten: Zunächst wird die Frontklappe montiert. Dazu wird der Scharnierträger an der Karosserie befestigt, das Scharnierunterteil wird mit dem Scharnierträger mit einer lösbaren Verbindung verbunden und das Scharnieroberteil an der Frontklappe angebracht. Nun kann das Scharnier und damit die Frontklappe gegebenenfalls eingestellt werden. Erst danach wird das Deformationselement oder der Aktuator montiert, wenn die Anordnung einen Fußgängeraufprallschutz aufweisen soll. Dazu wird das Deformationselement oder der Aktuator am Scharnierträger einerseits und am Scharnierunterteil andererseits befestigt. Anschließend wird die Verbindung zwischen dem Scharnierunterteil und dem Scharnierträger gelöst.

Der Vorteil dieses Verfahrens liegt darin, dass die Frontklappe zunächst konventionell eingestellt werden kann, und diese Einstellung auch bei der Montage des Deformationselementes oder des Aktuators nicht verloren geht. Auch kann die Karosserie mit dem Scharnier lackiert werden, bevor das Deformationselement oder der Aktuator montiert wird, sodass diese Bauteile weder durch den Lack selber noch durch die während des Lackierens herrschenden Temperaturen beschädigt werden können.

Weitere vorteilhafte Ausgestaltungen sind Gegenstand von Unteransprüchen.

In der Zeichnung ist ein Ausführungsbeispiel der Erfindung dargestellt, anhand dessen die Erfindung im folgenden näher beschrieben wird. Die einzelnen Figuren zeigen in schematischer Darstellungsweise:
- Fig. 1: eine perspektivische Ansicht eines Scharnierträgers,
- Fig. 2: eine perspektivische Ansicht des Scharnierträgers aus Fig. 1 mit einem daran angeschraubten Scharnier,

- Fig. 3: eine perspektivische Ansicht des Scharnierträgers aus Fig. 1 mit einem daran angebundenen Deformationselement, das wiederum mit einem Scharnier verbunden ist, und
- Fig. 4: eine perspektivische Ansicht des Scharnierträgers aus Fig. 1 mit einem daran angebundenen Aktuator, der wiederum mit einem Scharnier verbunden ist.

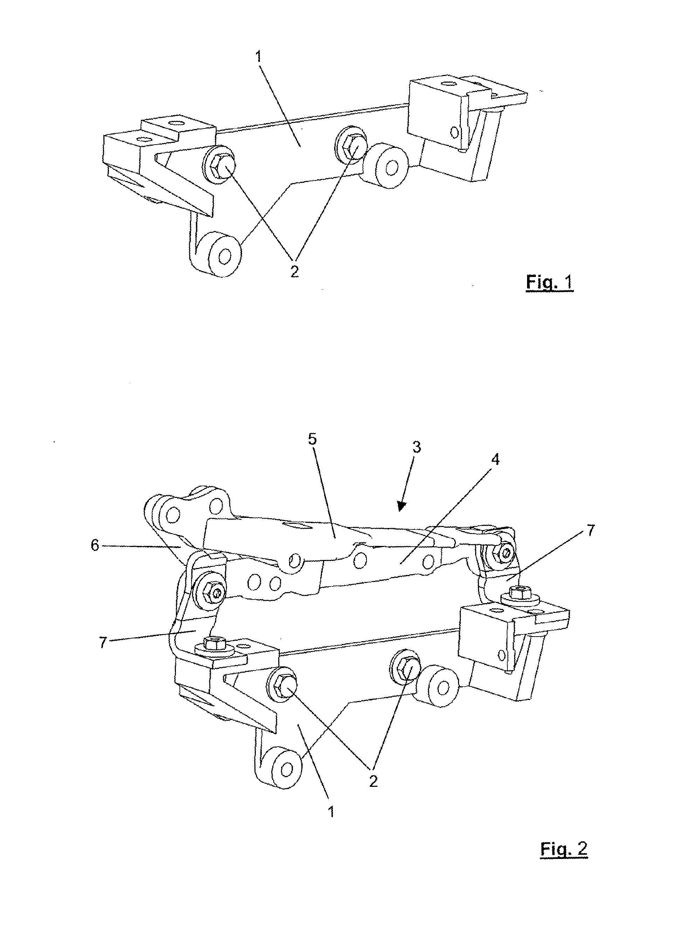

In Fig. 1 ist ein Scharnierträger 1 dargestellt, der mit zwei Schrauben 2 an einer nicht dargestellten Karosserie eines Fahrzeugs angeschraubt ist. An dem Scharnierträger 1 kann - wie in Fig. 2 dargestellt - ein Scharnier 3 einer Frontklappe eines Fahrzeugs befestigt werden. Das Scharnier 3 ist als Viergelenkscharnier ausgeführt und weist ein Scharnierunterteil 4 und ein Scharnieroberteil 5 auf, die über zwei Lenker 6 miteinander verbunden sind. Die nicht dargestellte Frontklappe ist mit dem Scharnieroberteil 5 verbunden, während das Scharnierunterteil 4 über zwei Winkel 7 mit dem karosseriefesten Scharnierträger 1 verschraubt ist.

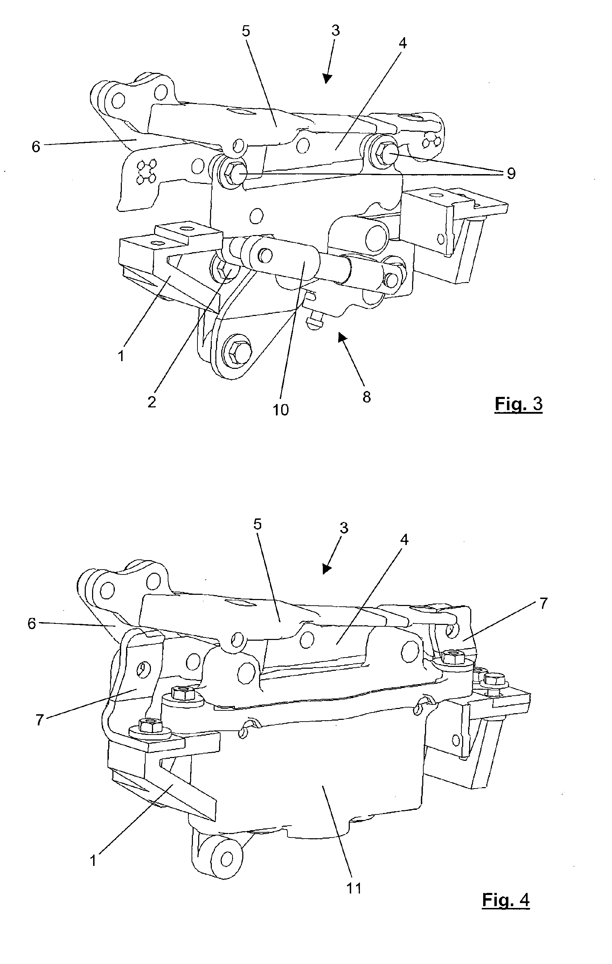

In Fig. 4 ist wieder der bereits in Fig. 1 und Fig. 2 dargestellte, mit der Karosserie des Fahrzeugs verbundene Scharnierträger 1 und das in Fig. 2 dargestellte Scharnier 3 gezeigt. Allerdings ist das Scharnier 3 nicht mit seinem Scharnierunterteil 4 am Scharnierträger 1 angeschraubt, sondern zwischen Scharnierträger 1 und Scharnierunterteil 4 ist ein Aktuator 11 angebracht, der einerseits mit dem Scharnierunterteil 4 und andererseits mit dem Scharnierträger 1 verschraubt ist. Der Aktuator 11 ist als Federspeicher ausgeführt, wie er bereits in der DE 102 16 054 A1 beschrieben ist. Der gesamte Offenbarungsgehalt der DE 102 16 054 A1 wird hiermit ausdrücklich in diese Schrift mit aufgenommen. Wenn nun über Sensoren eine Kollision des Fahrzeugs mit einem Fußgänger oder Radfahrer detektiert wird, wird über ein Steuergerät der Federspeicher des Aktuators 11 ausgelöst. Dadurch wird das Scharnier 3 und damit die mit dem Scharnieroberteil 5 verbundene Frontklappe schlagartig angehoben. In der angehobenen Stellung der Frontklappe steht der erforderliche Mindestabstand zwischen Frontklappe und den darunter liegenden Aggregaten zur Verfügung, um den Aufprall des Fußgängers oder Radfahrers auf eine biomechanisch verträgliche Weise zu verzögern.

In Fig. 3 ist ebenfalls der bereits beschriebene Scharnierträger 1 und das bereits bekannte Scharnier 3 dargestellt. Auch hier ist das Scharnierunterteil 4 nicht mit dem Scharnierträger 1 verschraubt. Stattdessen ist ein Deformationselement 8 einerseits mit dem Scharnierträger 1 und andererseits über zwei Schrauben 9 mit dem Scharnierunterteil 4 verschraubt. Das Deformationselement 8 ist in Form eines Scherengelenks ausgeführt, wobei ein Schenkel des Scherengelenks durch eine vorgespannte Gasdruckfeder 10 gebildet wird, die das Scherengelenk nach oben drückt, sodass das Scharnier 3 im Normalfall sich in derselben Position befindet, wie in der verschraubten, in Fig. 2 dargestellten Stellung. Diese Anordnung ist geeignet für Fahrzeuge, bei denen bereits bei geschlossener Frontklappe der erforderliche Mindestabstand zwischen Frontklappe und den darunter liegenden Aggregaten zur Verfügung steht. Nur im Anbindungsbereich der Frontklappe an das Scharnier 3 steht der erforderliche Mindestabstand nicht zur Verfügung. Bei einem Aufprall eines Fußgängers oder Radfahrers in diesem Bereich der Frontklappe wird nun das Scherengelenk das Deformationselement 8 entgegen der Kraft der Gasdruckfeder 10 zusammengedrückt, so dass auch in diesem Bereich die erforderliche Nachgiebigkeit der Frontklappe sichergestellt ist.

Bei den drei in Fig. 2 (kein Fußgängeraufprallschutz), in Fig. 4 (aktiver Fußgängeraufprallschutz) und in Fig. 3 (passiver Fußgängeraufprallschutz) beschriebenen Varianten kommt jeweils das gleiche Scharnier 3 zum Einsatz, das jeweils auf gleiche Weise mit der Frontklappe verbunden ist. Auch wird jeweils der gleiche Scharnierträger 1 verwendet, der auf jeweils gleiche Weise mit der Karosserie des Fahrzeugs verbunden ist. Die Erzeugung der Varianten erfolgt ausschließlich dadurch, dass entweder das Scharnierunterteil 4 direkt mit dem Scharnierträger 1 verschraubt wird, oder durch Zwischenschaltung eines Akuators 6 oder eines Deformationselements 8. Alle Varianten können also an der gleichen Karosserie und der gleichen Frontklappe mit dem gleichen Scharnier 3 verbaut werden. Dies ist nur dadurch möglich, dass der Scharnierträger 3 unterschiedliche Anschraubpunkte für das Scharnierunterteil 4, den Aktuator 11 und das Deformationselement 8 aufweist.

Zur Montage wird bei allen drei Varianten zunächst das Scharnierunterteil 4 mit dem Scharnierträger 1 - wie in Fig. 2 dargestellt - verbunden. Dann wird die Frontklappe relativ zur Karosserie über das Scharnier 3 eingestellt. Dazu sind alle Bohrungen in den Bauteilen, durch die die Schrauben zur Befestigung durchgesteckt werden, einen größeren Durchmesser als die jeweilige Schraube auf, sodass das Bauteil nach dem Lockern der jeweiligen Schraube(n) jeweils etwas verschoben werden kann. Nach dieser Justage der Frontklappe wird die gesamte Karosserie mit der Frontklappe und dem Scharnier 3 lackiert. Erst nach der Lackierung erfolgt die Generierung der gewünschten Variante.

Wenn kein Fußgängeraufprallschutz erforderlich ist, sind keine weiteren Montageschritte mehr erforderlich. Soll dagegen das Fahrzeug einen Fußgängeraufprallschutz aufweisen, wird der Aktuator 11 oder das Deformationselement 8 sowohl mit dem Scharnierträger 1 als auch mit dem Scharnierunterteil 4 verschraubt. Damit dies ohne Verspannungen der Bauteile zueinander möglich ist, sind auch hier die Bohrungen, durch die die Schrauben hindurchgesteckt werden, im Durchmesser größer als die jeweiligen Schrauben ausgeführt. Anschließend werden die Schrauben wieder herausgeschraubt, mit denen das Scharnierunterteil 4 direkt mit dem Scharnierträger 1 verschraubt ist. Da zuvor der Aktuator 11 oder das Deformationselement 8 mit dem Scharnierträger 1 und mit dem Scharnierunterteil 4 verschraubt wurde, bleibt dabei die Einstellung der Frontklappe erhalten. Zudem wird der Aktuator 11 oder das Deformationselement 8 weder dem Lack noch den Temperaturen während des Lackier- oder Lacktrockungsprozesses ausgesetzt.

Dies ist also eine sehr einfache und damit prozesssichere und kostensparende Methode, verschiedene Varianten eines Fahrzeugs bezüglich des Fußgängeraufprallschutzes zu generieren.

## Patentansprüche

1. Anordnung einer Frontklappe an einem Fahrzeug mit zumindest einem Scharnier (3), um das die Frontklappe zum Öffnen und Schließen verschwenkbar ist, das mit einem Scharnieroberteil (5) an der Frontklappe und mit einem Scharnierunterteil (4) an einem Scharnierträger (1) angebracht ist, der an der Karosserie des Fahrzeugs angebunden ist, **dadurch gekennzeichnet, dass** der Scharnierträger (1) so gestaltet ist, dass entweder das Scharnierunterteil (4) mit dem Scharnierträger (1) verbunden sein kann, oder ein Aktuator (11) zwischen Scharnierunterteil (4) und Scharnierträger (1) angebracht sein kann, um die Frontklappe mit dem Scharnier (3) anheben zu können, wenn eine Kollision eines Fußgängers oder Radfahrers mit dem Fahrzeug detektiert wird, oder ein Deformationselement (8) zwischen Scharnierunterteil (4) und Scharnierträger (1) angebracht sein kann, sodass die Frontklappe im Bereich des Scharniers (3) nachgiebig ist.

2. Anordnung nach Anspruch 1, **dadurch gekennzeichnet, dass** die Anbindungspunkte für das Scharnierunterteil (4) am Scharnierträger (1) andere sind als die Anbindungspunkte für den Aktuator (11) oder das Deformationselement (8) am Scharnierträger (1).

3. Verfahren zur Montage einer Anordnung einer Frontklappe an einem Fahrzeug nach einem der vorhergehenden Ansprüche, bestehend aus folgenden Schritten:
a) Montage der Frontklappe: Befestigen des Scharnierträgers (1) an der Karosserie, Verbinden des Scharnierunterteils (4) mit dem Scharnierträger (1) mit einer lösbaren Verbindung und Befestigen des Scharnieroberteils (5) an der Frontklappe, sowie gegebenenfalls Einstellen des Scharniers (3),
b) Montage des Deformationselementes (8) oder Aktuators (11), wenn die Anordnung einen Fußgängeraufprallschutz aufweisen soll: Befestigen des Deformationselementes (8) oder Aktuators (11) am Scharnierträger (1) einerseits und am Scharnierunterteil (4) andererseits und anschließendes Lösen der Verbindung zwischen dem Scharnierunterteil (4) und dem Scharnierträger (1).

4. Verfahren nach Anspruch 4, **dadurch gekennzeichnet, dass** nach dem Schritt a) die Karosserie mit der angelenkten Frontklappe und dem Scharnier (3) lackiert wird, bevor im Schritt b) gegebenenfalls das Deformationselement (8) oder der Aktuator (11) montiert wird.
